# EUROPEAN PATENT SPECIFICATION

(11) **EP 1 856 754 B1**
(45) Date of publication and mention of the grant of the patent: **08.05.2013**
(21) Application number: 06729296.1
(22) Date of filing: 10.03.2006
(51) Int. Cl.: H01M 8/02, H01M 8/04

(54) **AIR-COOLED FUEL CELL SYSTEM**
LUFTGEKÜHLTES BRENNSTOFFZELLENSYSTEM
SYSTEME DE PILE A COMBUSTIBLE A REFROIDISSEMENT PAR AIR

(30) Priority: 10.03.2005 JP 2005067492
(43) Date of publication of application: 21.11.2007
(73) Proprietor: TOYOTA JIDOSHA KABUSHIKI KAISHA, Toyota-shi, Aichi-ken, 471-8571 (JP)
(72) Inventor: MURATA, Shigeaki, , Toyota-shi, Aichi, 4718571 (JP); NAKANISHI, Haruyuki, , Toyota-shi, Aichi, 4718571 (JP)
(74) Representative: TBK
(86) International application number: PCT/JP2006/305306
(87) International publication number: WO 2006/095926

(56) References cited:
- DE-A1- 10 250 759
- US-A1- 2004 106 028
- US-B1- 6 218 038
- PATENT ABSTRACTS OF JAPAN vol. 013, no. 106 (E-726), 14 March 1989 (1989-03-14) & JP 63 276878 A (MITSUBISHI ELECTRIC CORP), 15 November 1988 (1988-11-15) cited in the application

## Description

### Technical Field

The present invention relates to an air-cooled (i.e., an air cooled-type or air cooling type) fuel cell system provided with an air-cooled fuel cell which uses an oxidizing gas for power generation and cooling.

### Background Art

As this type of air-cooled fuel cell system, there is proposed a system in which air used for a cell reaction and air used for cooling are supplied in a common air supply route (e.g. refer to Patent document 1).

According to the air-cooled fuel cell disclosed in the Patent document 1 (hereinafter referred to as a "conventional technology"), it is considered that it is possible to quickly restore or bring the temperature of the fuel cell back to a set value by controlling the volume of the air blown by a blower.

Incidentally, there is also proposed another technology in which one portion of the air used for cooling in the fuel cell is used as the air for power generation (refer to Patent document 2).

Moreover, in the fuel cell, there is also proposed another technology in which the air for reaction and the air for cooling are blown in a stoichiometric ratio (refer to Patent document 3).

Patent document 4 discloses an air-cooled fuel cell system including an arrangement such that both the oxidizing gas for cooling and the oxidizing gas for power generation flow from a same side.

[Patent document 1] Japanese Examined Patent Application Publication (Kokoku) No. Hei-6-101347
[Patent document 2] Japanese Patent Application Laid Open No. Sho-63-276878
[Patent document 3] Published Japanese translation of PCT international application No. 2003-529195
[Patent document 4] US Patent 5019463 B1

### Disclosure of Invention

### Object to be Solved by the Invention

In some fuel cell, if it reaches a too high temperature, the amount of power generation decreases in accordance with an increase in the supply of the oxidizing gas. In the conventional technology, if the amount of the air for cooling is increased, the amount of the air for power generation is also increased. Thus, in the end, if the fuel cell is cooled down by controlling the volume of the air blown by the blower, this cooling of the fuel cell may reduce the output of the fuel cell. In other words, the conventional technology has such a technical problem that it is difficult to cool down the air-cooled fuel cell without the output reduction.

It is therefore an object of the present invention to provide an air-cooled fuel cell system which enables an air-cooled fuel cell to be cooled down without or with less output reduction.

### Means for Solving the Object

The above object of the present invention can be achieved by an air-cooled fuel cell system provided with: an air-cooled fuel cell having a cell in which a first channel portion for letting an oxidizing gas for cooling flow and a second channel portion for letting an oxidizing gas for power generation flow are formed such that both the oxidizing gas for cooling and the oxidizing gas for power generation flow from a same side; a supplying device for supplying oxidizing gas; and a distributing device for distributing the supplied oxidizing gas into the first channel portion and the second channel portion, as the oxidizing gas for cooling and the oxidizing gas for power generation, respectively, in a variable distribution ratio.

The "air-cooled fuel cell" of the present invention is a concept including a fuel cell or a fuel battery in an aspect in which an electromotive force or power is obtained by an electrochemical reaction which occurs in an anode electrode and a cathode electrode which sandwich an electrolyte membrane therebetween. In particular, it indicates an aspect in which an oxidizing gas is used for cooling. For example, it indicates a polymer electrolyte fuel cell or a proton-exchange membrane fuel cell (i.e., PEM or PEFC).

According to the air-cooled fuel cell system of the present invention, the oxidizing gas is supplied by the supplying device. The "oxidizing gas" of the present invention is a gas, including oxygen, for example, which can generate an electromotive force, resulting from an electrochemical reaction with fuel (e.g. hydrogen) included in a fuel gas which is supplied to the anode electrode. Typically, the oxidizing gas is air. If the oxidizing gas is air, it is efficient since there is no need to provide a special supply source; however, the oxidizing gas is not limited to air. Moreover, the "supplying device" is a concept including equipment or a mechanism which can blow the oxidizing gas from the supply source side of the oxidizing gas to the air-cooled fuel cell side, such as a blower, a fan, a pump, and a compressor.

The air-cooled fuel cell of the present invention has the cell (i.e., the unit cell or single cell) in which the first channel portion and the second channel portion are formed. The oxidizing gas supplied by the supplying device is used as the oxidizing gas for cooling and the oxidizing gas for power generation which flow in the first channel portion and the second channel portion, respectively. Incidentally, the "channel portion" includes a channel (or path) as being the passage of each oxidizing gas, and it is a concept including a material element (e.g. a wall surface or the like) which defines the channel. These channel portions are formed in a separator or the like in the cell, for example. Moreover, "having the cell" is a concept indicating that the air-cooled fuel cell of the present invention includes at least one of such cells. In other words, the air-cooled fuel cell of the present invention may be constructed as such a cell, i.e., a single cell, or maybe has a stack structure in which a plurality of cells are laminated. Moreover, if it has the stack structure, the whole structure is not necessarily constructed from such a cell.

The first channel portion and the second channel portion are formed such that both the oxidizing gas for cooling and the oxidizing gas for power generation flow from the same side i.e., the side same to each other. Here, "flow from the same side" is a concept indicating that the oxidizing gases flow from one side to the opposite side of each cell, in a broad view or in an overall view. As long as such a concept is secured, a position to which each oxidizing gas is introduced in each channel portion is not necessarily located in the same side or edge portion of the cell. Moreover, as long as such a concept is secured, the shape of the channels of the first and second channel portions is not limited. For example, it may be a plurality of linear channels arranged in parallel, or may be one snaking channel. Moreover, it may be a spiral channel, as called a "serpentine".

On the other hand, in the cell having the first channel portion and the second channel portion which are formed such that both the oxidizing gas for cooling and the oxidizing gas for power generation flow from the same side, a change in the amount of power generation of the cell becomes small relative to the stoichiometric ratio of the oxidizing gas for power generation, until a certain degree of cell temperature. Here, the "stoichiometric ratio" is a ratio of the actual supply to the supply of the gas necessary for power generation, and it is the excess ratio of the supplied gas. The state that the stoichiometric ratio is "1" is namely the ideal state that the gas is used most effectively. However, actually, a commensurate loss is caused in the fuel cell, so that it is preferable to set the stoichiometric ratio in the actual operation to be greater than 1, at least. Incidentally, the stoichiometric ratio increases with an increase in the supply of the gas, so that in a wide sense, it may be treated as the equivalence of the amount of the oxidizing gas for power generation which flows in the second channel portion.

Here, particularly, if the cell temperature increases in a temperature area which is lower than (equal to or less than) such a temperature, it is possible to reduce the cell temperature, relatively easily, by increasing the supply of the oxidizing gas supplied by the supplying device. However, if the cell temperature is in a temperature area which exceeds such a temperature, a change in the amount of power generation of the cell becomes large relative to the stoichiometric ratio of the oxidizing gas for power generation. More specifically, as the stoichiometric ratio increases, the amount of power generation of the cell decreases. Because of this, if the oxidizing gas for power generation increases with an increase of the oxidizing gas for cooling, the amount of power generation of the cell decreases with the cooling of the cell.

Thus, in the air-cooled fuel cell system of the present invention, the above-mentioned problem is solved by providing the distributing device. Namely, the oxidizing gas supplied from the supplying device is distributed by the distributing device into the first channel portion and the second channel portion, as the oxidizing gas for cooling and the oxidizing gas for power generation, respectively. At this time, the distributing device can distribute the supplied oxidizing gas in the variable distribution ratio, with respect to these channel portions.

Here, "in the variable distribution ratio" is a concept indicating that the ratio of the oxidizing gas distributed to each of the first channel portion and the second channel portion can be controlled in a physical, mechanical, mechanistic, or electrical method, for example. The "distributing device" of the present invention may have an arbitrary aspect as long as it can perform such distribution. For example, it may be a valve disposed in an intake-side manifold for introducing the supplied oxidizing gas to each cell of the fuel cell.

Incidentally, the range of the variable distribution ratio is not limited at all, as long as the distribution ratio of the oxidizing gas for cooling and the oxidizing gas for power generation can be somewhat changed, as compared to the case where such distribution is not performed at all.

According to the air-cooled fuel cell system of the present invention, it is possible to change the distribution ratio of the oxidizing gas for cooling and the oxidizing gas for power generation, with respect to the cell, by the operation of the distributing device. Thus, it is possible to reduce the cell temperature without a decrease or with less decrease in the amount of power generation of the cell.

Incidentally, the "amount of power generation" is a concept indicating that the amount of power generation can be substituted by another physical quantity which defines the amount of power generation, as long as the behavior thereof with respect to the stoichiometric ratio as described above does not change. For example, the physical quantity may be voltage.

In one aspect of the air-cooled fuel cell system of the present invention, it is further provided with: a temperature detecting device for detecting a temperature of the cell; and a controlling device for (i) controlling at least one of the distributing device and the supplying device to increase at least one of the oxidizing gas for cooing and the oxidizing gas for power generation if the detected temperature is less than a threshold temperature which defines a temperature area in which a change in an amount of power generation of the cell in response to a change of a stoichiometric ratio of the oxidizing gas for power generation is small and if the detected temperature is greater than a target temperature which is set in advance as a temperature of less than the threshold temperature, and for (ii) controlling the distributing device not to increase the oxidizing gas for power generation but to increase the oxidizing gas for cooling if the detected temperature is equal to or greater than the threshold temperature.

According to this aspect, the temperature of the cell is detected by the temperature detecting device. The temperature detecting device of the present invention may have an arbitrary aspect, as long as it can detect the cell temperature. Moreover, the temperature detecting device is not necessarily provided for all the cells of the present invention. For example, the temperature of the plurality of the cells may be represented by the temperature of one cell determined on an arbitrary or certain basis. Moreover, as a substitution of the cell temperature, it is also possible to use the temperature of the exhaust of the oxidizing gas for cooling, the temperature of the exhaust of the oxidizing gas for power generation, or the like.

If the cell temperature is detected, the controlling device controls the distribution device in accordance with the detected cell temperature. As described above, in the cell which is formed such that both the oxidizing gas for cooling and the oxidizing gas for power generation flow from the same side, there is a temperature range in which a change in the amount of power generation of the cell is small relative to the stoichiometric ratio of the oxidizing gas for power generation. Here, "small" may be defined on the basis of inequality with respect to precise or strict numerical values, or it maybe defined on the basis of such relative inequality that a change in the amount of power generation of the cell in the temperature range is relatively smaller than that in another temperature range. Such a change in the amount of power generation of the cell relative to the stoichiometric ratio substantially becomes large as the cell temperature increases. In other words, in a temperature range which exceeds the temperature range defined as described above, such a change becomes large. In the air-cooled fuel cell system of the present invention, the threshold temperature which defines such a temperature range is set in advance. Incidentally, the threshold temperature may be set in advance, experimentally, experientially, or by simulations or the like, or it maybe set in accordance with the state of the cell, as occasion demands.

On the other hand, in the actual use of the fuel cell, obviously, it is preferable to drive the fuel cell in a temperature range of less than the threshold temperature, from the viewpoint that the efficient state of power generation is maintained. Therefore, the target temperature when electric power is generated in the air-cooled fuel cell of the present invention is set in advance to be less than the threshold temperature. Incidentally, the target value may be set in advance, experimentally, experientially, or by simulations or the like, or it may be set in accordance with the state of the cell, as occasion demands. Incidentally, "less than threshold temperature" indicates that it may be treated as a concept equivalent to "equal to or less than the threshold temperature", depending on how to set the threshold value.

The controlling device controls at least one of the distributing device and the supplying device to increase at least one of the oxidizing gas for cooling and the oxidizing gas for power generation if the detected cell temperature is less than the threshold temperature and is greater than the target temperature. Incidentally, "greater than the target temperature" indicates that it may be substituted by "equal to or greater than the target temperature", in some aspects of the setting of the target temperature.

If the cell temperature is in a temperature range which is greater than the target temperature and is less than the threshold temperature, it is relatively free to select a method of cooling the cell. Only the amount of the oxidizing gas for cooling may be increased, or both the oxidizing gas for cooling and the oxidizing gas for power generation may be increased. Moreover, in this temperature range, if the amount of power generation of the cell somewhat increases with respect to the stoichiometric ratio, the loss of power generation decreases as the amount of power generation of the cell increases, and in the end, the cell temperature decreases. Thus, it is also possible to increase only the oxidizing gas for power generation. Moreover, the above may be realized by controlling the distribution ratio in the distributing device, or maybe realized simply by controlling the supply of the oxidizing gas supplied by the supplying device. Alternatively, it may be realized by increasing the supply of the oxidizing gas as a whole and further controlling the distribution ratio in the distribution device. The aspect of the control of each device in the cooling may be set in advance, experimentally, experientially, or on the basis of simulations or the like. Moreover, in this case, the controlling method may be determined in accordance with the cell temperature and the stoichiometric ratio.

On the other hand, the controlling device controls the distributing device not to increase the oxidizing gas for power generation but to increase the oxidizing gas for cooling if the detected temperature is equal to or greater than the threshold temperature. Incidentally, "equal to or greater than the threshold temperature" is a concept indicating that it can be substituted by "greater than the threshold temperature" in some aspects of the setting of the threshold temperature.

If the cell temperature is equal to or greater than the threshold temperature, the increase of the oxidizing gas for power generation causes the stoichiometric ratio to increase, to thereby reduce the amount of power generation of the cell. Therefore, by controlling the distribution ratio in the distributing device to increase only the oxidizing gas for cooling, without an increase of the oxidizing gas for power generation, it is possible to effectively cool down the cell. Incidentally, at this time, the amount of the oxidizing gas for power generation may be maintained or controlled to decrease. Moreover, in addition to the distributing device, the supplying device may be controlled, as occasion demands. The aspect of the control of each device in such a temperature range may be set in advance, experimentally, experientially, or on the basis of simulations or the like.

According to this aspect, by that the controlling device controls the distributing device, it is possible to cool down the air-cooled fuel cell, efficiently and effectively.

Incidentally, in this aspect, the air-cooled fuel cell system of the present invention may be further provided with a target temperature setting device for setting the target temperature in accordance with a state of the air-cooled fuel cell.

The characteristic of the change in the amount of power generation of the cell with respect to the stoichiometric ratio, as described above, likely changes with time, due to the change of the fuel cell itself or due to the environment of the fuel cell. In such a case, if the target temperature is a fixed value, it is not necessarily efficient to generate electric power at the target value in some cases. Thus, if the target value can be set in accordance with the state of the air-cooled fuel cell by the target temperature setting device, as described above, it is possible to efficiently use the air-cooled fuel cell, which is preferable.

Incidentally, in an aspect provided with the temperature detecting device and the controlling device as described above, the air-cooled fuel cell system of the present invention may be further provided with a threshold temperature setting device for setting the threshold temperature in accordance with a state of the air-cooled fuel cell.

As in the target value, the threshold value also likely changes, so that it is preferable to provide the threshold temperature setting device, as described above.

These effects and other advantages of the present invention become more apparent from the following embodiments and examples.

### Brief Description of Drawings

[FIG. 1] FIG. 1 is a schematic perspective view showing an air-cooled fuel cell system according to an embodiment of the present invention.
[FIG. 2] FIG. 2 is an A-A' cross sectional view in FIG. 1.
[FIGs. 3] FIGs. 3 are B-B' cross sectional views in FIG. 1.
[FIG. 4] FIG. 4 is a characteristic curve of a cell voltage at each temperature in a fuel cell provided for the air-cooled fuel cell system in FIG. 1.
[FIG. 5] FIG. 5 is a flowchart showing a temperature controlling process performed in the air-cooled fuel cell system in FIG. 1.

### Description of Reference Codes

| | |
|---|---|
| 10 | Air-cooled fuel cell system |
| 100 | Controlling apparatus |
| 200 | Air supply system |
| 210 | Air supplying apparatus |
| 300 | Fuel cell stack |
| 310 | Fuel cell |
| 314 | Power generating air channel portion |
| 315 | Cooling air channel portion |
| 320 | Air intake manifold |
| 400 | Variable valve |
| 500 | Temperature Sensor |

### Best Mode for Carrying Out the Invention

### <Embodiment of the Invention>

The preferable embodiment of the present invention will be discussed with reference to the drawings hereinafter.

### <Structure of Embodiment>

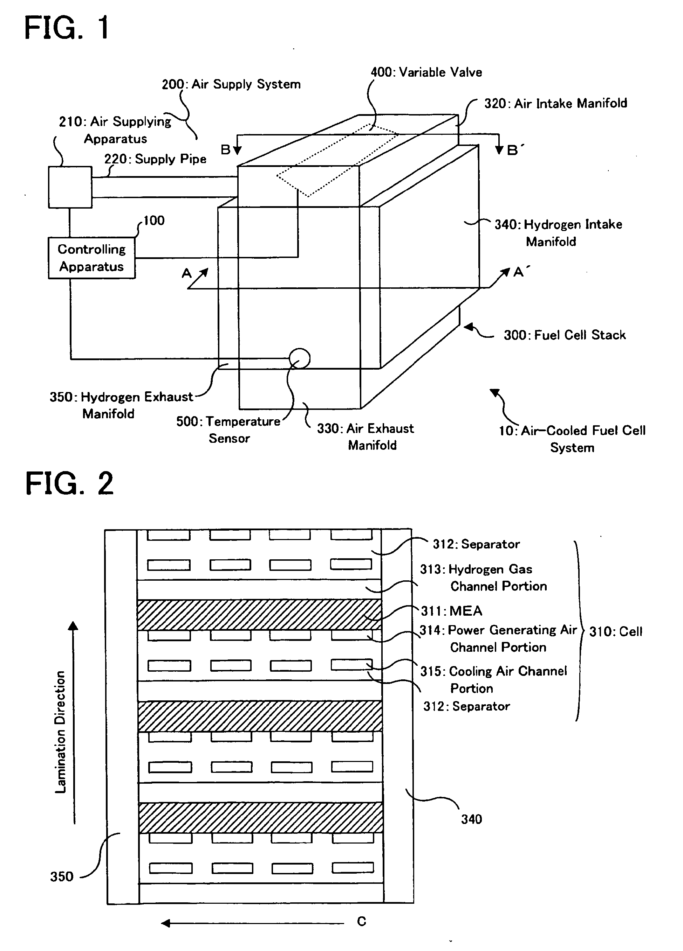

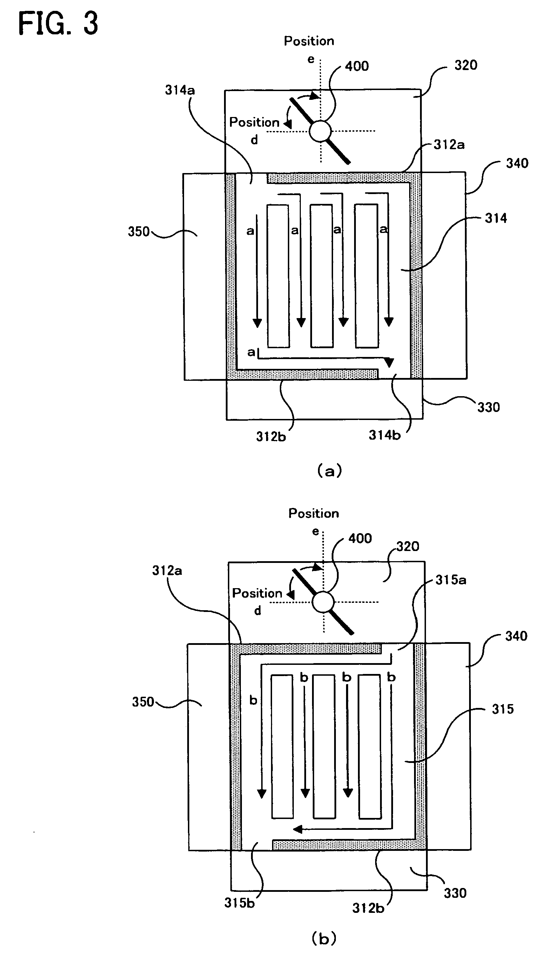

At first, with reference to FIG. 1 to FIGs. 3, as occasion demands, the structure of an air-cooled fuel cell system according to the embodiment of the present invention will be discussed. FIG. 1 is a schematic perspective view showing an air-cooled fuel cell system 10. FIG. 2 is an A-A' cross sectional view in FIG. 1. FIGs. 3 are B-B' cross sectional views in FIG. 1.

In FIG. 1, the air-cooled fuel cell system 10 is provided with: a controlling apparatus 100; an air supply system 200; a fuel cell stack 300; a variable valve 400; and a temperature sensor 500.

The controlling apparatus 100 is a control unit for controlling the operation or operations of the air-cooled fuel cell system 10, and is constructed to function as one example of the "controlling device" of the present invention.

The air supply system 200 is provided with: an air supplying apparatus 210; and an air supply pipe 220.

The air supplying apparatus 210 is an apparatus for supplying air, which is one example of the "oxidizing gas" of the present invention, to the fuel cell stack 300, and is one example of the "supplying device" of the present invention. The air supplying apparatus 210 is provided with a not-illustrated fan and can change the supply amount of the air by that the controlling apparatus 100 controls the rotation amount of the fan. The supply pipe 220 is a pipe or line to connect the air supplying apparatus 210 and an air intake manifold 320 described later. Incidentally, there is a supply source for taking in air from the exterior and supplying it to the air supplying apparatus 210, on the opposite side of the supply pipe 220 in the air supplying apparatus 210, but the illustration thereof is omitted.

The fuel cell stack 300 is one example of the "air-cooled fuel cell" of the present invention, provided with: a plurality of fuel cells 310 (not illustrated in FIG. 1); the air intake manifold 320; an air exhaust manifold 330; a hydrogen intake manifold 340; and a hydrogen exhaust manifold 350.

The air intake manifold 320 is constructed to be communicated with the supply pipe 220, and can pool the air supplied from the air supplying apparatus 210 and supply it to each fuel cell 310. The air exhaust manifold 330 is constructed to pool the air used on each fuel cell 310 and supply it to a not-illustrated air exhaust system. The hydrogen intake manifold 340 is constructed to pool a hydrogen gas supplied from a not-illustrated hydrogen gas supply system and supply it to each fuel cell 310. The hydrogen exhaust manifold 350 is constructed to pool the hydrogen gas used on each fuel cell 310 and supply it to a not-illustrated hydrogen gas exhaust system.

In FIG. 2, the fuel cells (hereinafter referred to as "cells", as occasion demands) 310 are arranged in order in an illustrated lamination direction, and each of them constitutes one example of the "cell" of the present invention.

The cell 310 is provided with: a MEA (Membrane-Electrode Assembly) 311; a separator 312; a hydrogen gas channel portion (i.e., a path through which hydrogen gas flows) 313; a power generating air channel portion (i.e., a path through which air for generating power flows) 314; and a cooling air channel portion (i.e., a path through which air for cooling flows) 315.

The MEA 311 is provided with: an anode electrode; a cathode electrode; and an electrolyte membrane sandwiched between the pair of electrodes. The MEA 311 is constructed to generate an electromotive force, by electrochemically reacting the air supplied to the cathode electrode with the hydrogen gas supplied to the anode electrode via the electrolyte membrane.

The separator 312 is a member which partially has electrical conductivity. The hydrogen gas channel portion 313, the power generating air channel portion 314, and the cooling air channel portion 315 are independently formed inside the separator 312.

The hydrogen gas channel portion 313 is constructed to function as a channel for letting the hydrogen gas for power generation flow in one edge portion in the lamination direction of the separator 312. Incidentally, the channel of the hydrogen gas channel portion 313 is formed as a plurality of linear channels which extend in an arrow C direction in FIG. 2. The hydrogen gas flowing from the hydrogen intake manifold 340 is emitted to the hydrogen exhaust manifold 350 through the hydrogen gas channel portion 313.

The power generating air channel portion 314 is one example of the "second channel portion" of the present invention, constructed to function as a channel for letting the air for power generation flow in the other edge portion in the lamination direction of the separator 312. The cooling air channel portion 315 is formed between the hydrogen gas channel portion 313 and the power generating air channel portion 314. The cooling air channel portion 315 is one example of the "first channel" of the present invention, constructed to function as a channel for letting the air for cooling flow which cools down the cells 310. The cooling air channel portion 315 is shared by two cells 310 which are adjacent to each other. The channels of the power generating air channel portion 314 and the cooling air channel portion 315 are both formed as a plurality of linear channels which extend in a direction perpendicular to the paper in FIG. 2.

With respect to FIGs. 3, FIG. 3(a) shows a cross section which shows the power generating air channel portion 314, and FIG. 3(b) shows a cross section which shows the cooling air channel portion 315. Incidentally, in FIGs. 3, as a matter of convenience, the two cross sections are shown as B-B' cross sectional views in FIG. 1.

In FIG. 3(a), the power generating air channel portion 314 has a communication opening 314a which is communicated with the air intake manifold 320 in an area portion 312a of the separator 312, and has a communication opening 314b which is communicated with the air exhaust manifold 330 in an area portion 312b of the separator 312. The power generating air channel portion 314 has such a structure that the air for power generation flowing from the communication opening 314a flows to the communication opening 314b through linear channels in a flow shown by illustrated arrows a.

In FIG. 3(b), the cooling air channel portion 315 has a communication opening 315a which is communicated with the air intake manifold 320 in an area portion 312a of the separator 312, and has a communication opening 315b which is communicated with the air exhaust manifold 330 in an area portion 312b of the separator 312. The cooling air channel portion 315 has such a structure that the air for cooling which flows from the communication opening 315a flows to the communication opening 315b through linear channels in a flow shown by illustrated arrows b.

As is clear from FIGs. 3, each of the channel portions is constructed such that both the air for power generation and the air for cooling flow from the air portion 312a to the air portion 312b of the separator 312, in a broad view. In other words, it is constructed such that the air for power generation and the air for cooling flow from the same side on each cell 310.

The variable valve 400 is disposed in the air intake manifold 320, and it is a movable valve which can move under the control of the controlling apparatus 100. The movable range of the variable valve 400 is defined by illustrated positions d and e. As the variable valve 400 gets closer to the position d, the amount of the air for cooling relatively increases, and as the variable valve 400 gets closer to the position e, the amount of the air for power generation relatively increases. In other words, the variable valve 400 is constructed such that the distribution ratio of the air flowing into the power generating air channel portion 314 and the air flowing into the cooling air channel portion 315 changes depending on its stop position.

Back in FIG. 1, the temperature sensor 500 is one example of the "temperature detecting device" of the present invention, and is constructed to detect the temperature of an arbitrary cell 310. In the embodiment, a cell temperature detected by the temperature censor 500 is adopted as the temperature of all the cells 310 which constitute the fuel cell stack 300.

### <Operation of Embodiment>

Next, the operation of the air-cooled fuel cell system 10 with the above-mentioned structure will be discussed.

### <Basic Operation of Air-Cooled Fuel Cell System 10>

At first, the basic operation of the air-cooled fuel cell system 10 will be discussed.

In operating the air-cooled fuel cell system 10, the controlling apparatus 100 controls the hydrogen gas supply system for supplying a hydrogen gas, to thereby supply the hydrogen gas to the hydrogen intake manifold 340. The supplied hydrogen gas is supplied from the hydrogen intake manifold 340 to the hydrogen gas channel portion 313 in the separator 312. The hydrogen gas supplied to the hydrogen gas channel portion 313 is diffused in a diffusing layer (i.e., a layer for diffusing gas) in the anode electrode which constitutes the MEA 311, and reaches an anode-side catalyst.

On the other hand, the controlling apparatus 100 controls the air supplying apparatus 210, to thereby supply the air to the air intake manifold 320. The supplied air is supplied from the air intake manifold 320 to the power generating air channel portion 314 and the cooling air channel portion 315 in the separator 312. At this time, the air distribution ratio of the power generating air channel portion 314 and the cooling air channel portion 315 is controlled by the position of the variable valve 400. Normally, the controlling apparatus 100 sets the position of the variable valve 400 to a position which is closer to the position e in FIG. 3. In other words, the variable valve 400 is controlled to be located in a position where the amount of the air flowing into the power generating air channel portion 314 is greater. The air flowing into the power generating air channel portion 314 is diffused in a diffusing layer (i.e., a layer for diffusing air) in the cathode electrode which constitutes the MEA 311, and reaches a cathode-side catalyst.

The hydrogen gas which has reached the anode-side catalyst is separated into electrons and protons, by a reaction as shown in the following chemical formula (1). The electrons reach the cathode electrode through an external circuit from the anode electrode. At the same time, the protons move to the cathode electrode through the electrolyte membrane.

H₂→2H⁺ + 2e⁻ Chemical formula (1)

On the other hand, a reaction as shown in the following chemical formula (2) occurs in the cathode electrode. Namely, oxygen molecules in the air which is supplied to the diffusing layer receive the electrons which have passed through the external circuit, to thereby form oxygen ions. At the same time, the oxygen ions bond with hydrogen ions, to thereby form water, and then the water is emitted.

2H⁺ + 2e⁻+(1/2)O₂→H₂O Chemical formula (2)

In each fuel cell 310, this type of electrochemical reaction generates an electromotive force (i.e., generates electricity or electric power). The electromotive force is taken out through a predetermined load, as the output of the fuel cell stack 300 in the end.

### <Temperature Control in Air-Cooled Fuel Cell System 10>

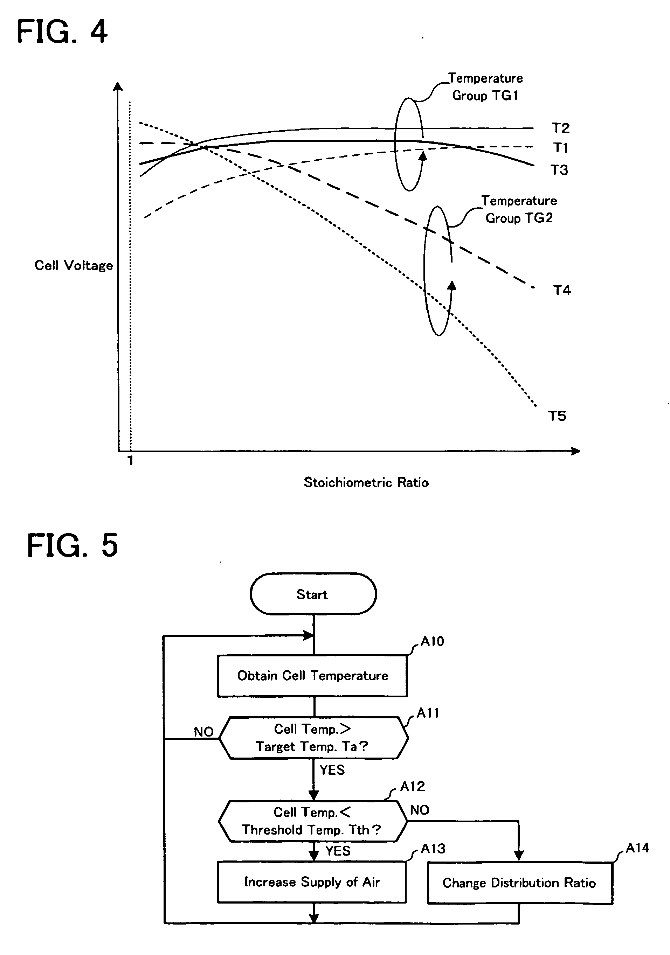

The cell 310 generates heat in the above-mentioned power generating procedure. Here, with reference to FIG. 4, a relationship between a cell temperature and a cell voltage will be discussed. FIG. 4 is a characteristic curve of the cell voltage at each temperature in the cell 310.

In FIG. 4, the vertical axis shows the cell voltage, and the horizontal axis shows the stoicheiometric ratio of the air for power generation. Incidentally, it is assumed that the "amount of power generation of the cell" in the present invention is alternatively represented by the cell voltage shown on the vertical axis. As shown in FIG. 4, the cell voltage tends to decrease as a whole, with an increase in the cell temperature. Therefore, there is a need to appropriately control the cell temperature in the air-cooled fuel cell system 10. In the air-cooled fuel cell system 10, the controlling apparatus 100 performs a temperature controlling process, and the temperature of the cell 310 is controlled in the temperature controlling process. Incidentally, the cell 310 normally operates in an area where the stoichiometric ratio is greater than 1.

Here, with reference to FIG. 5, the detailed temperature controlling process will be discussed. FIG. 5 is a flowchart showing the temperature controlling process.

In FIG. 5, at first, the controlling apparatus 100 obtains the cell temperature (step A10). The controlling apparatus 100 monitors the output of the temperature sensor 500 at constant timing, and obtains the output as the cell temperature. If obtaining the cell temperature, the controlling apparatus 100 judges whether or not the cell temperature is greater than a target temperature Ta (step A11).

Now, with reference to FIG. 4 again, the "target temperature" will be explained. In the air-cooled fuel cell, if it is constructed such that the air for power generation and the air for cooling flow from the same side, as in the embodiment, there are a temperature area (an illustrated "temperature group TG1") including temperatures T1, T2, and T3 (T3>T2>T1) in which there is a relatively small change in the cell voltage with respect to the stoichiometric ratio of the air for power generation, and a temperature area (an illustrated "temperature group TG2") including temperature T4 and T5 (T5>T4>T3) in which there is a relatively large change in the cell voltage.

If the cell 310 is operated at a temperature which belongs to the temperature group TG2 (e.g. the temperature T4 or T5), the cell voltage easily becomes unstable. In the embodiment, a threshold temperature Tth (T3<Tth<T4) is set as a temperature for defining a boundary between the temperature group TG1 and the temperature group TG2. The threshold value Tth is stored in such a form that the controlling apparatus 100 can refer to it in advance. In the embodiment, the target temperature Ta of the cell 310 is set as a lower temperature than the threshold temperature Tth. The target temperature Ta is also stored in such a form that the controlling apparatus 100 can refer to it in advance, as in the threshold temperature Tth. Incidentally, the target temperature Ta is set in advance to an optimum value, experimentally, experientially, or on the basis of simulations or the like, in a temperature range of lower than the threshold temperature Tth.

Back in FIG. 5, if the cell temperature is equal to or less than the target temperature Ta (the step A11: NO), the controlling apparatus 100 returns the process to the step A10, and repeats the obtainment of the cell temperature. At the same time, if the cell temperature becomes greater than the target temperature Ta (the step A11: YES), the controlling apparatus 100 judges whether or not the cell temperature is less than the threshold temperature Tth (step A12).

If the cell temperature is less than the threshold temperature Tth (the step A12: YES), the controlling apparatus 100 controls the air supplying apparatus 210 to increase the supply of the air (step A13). By the fact that the amount of the supplied air increases, the amount of the air supplied to the air intake manifold 320 increases. Consequently, the amount of the air flowing into the cooling air channel portion 315 increases. Therefore, the cell 310 is cooled down, and the cell temperature decreases.

On the other hand, in the case where the supply of the air is increased, the amount of the air for power generation is also increased. Here, the cell temperature which is greater than the target temperature Ta and which is less than the threshold temperature Tth is a temperature which belongs to the temperature group TG1 in FIG. 4. At the temperature which belongs to the temperature group TG1, there is a relatively small change in the cell voltage with respect to the stoichiometric ratio of the air for power generation in the cell 310. Therefore, even if the air for power generation is increased with an increase of the air for cooling, the power generating state of the cell 310 does not significantly change, to a controversial extent. Moreover, for example, at the temperature T1, the cell voltage tends to increase with respect to the stoichiometric ratio. In this case, the cell voltage is increased by the fact that the air for power generation is increased, and the loss of the power generation of the cell decreases, to thereby reduce the cell temperature. In other words, it is possible to effectively cool down the cell.

Back in FIG. 5, if the cell temperature is equal to or greater than the threshold temperature Tth (the step A12: NO), the controlling apparatus 100 controls the variable valve 400, to thereby change the distribution ratio of the supplied air (step A14).

Here, the cell temperature which is equal to or greater than the threshold temperature Tth is a temperature which belongs to the temperature group TG2 in FIG. 4. At the temperature which belongs to the temperature group TG2, there is a relatively large change in the cell voltage with respect to the stoichiometric ratio, and the cell voltage decreases relatively greatly with an increase in the stoichiometric ratio. Therefore, in this case, if the supplied air is simply increased as a whole, as in the process according to the step A13, it is difficult to prevent the cell voltage from decreasing. Thus, the controlling apparatus 100 controls the variable valve 400, to thereby change the distribution ratio of the air which is supplied to the air intake manifold 320 so as to increase the air flowing into the cooling air channel portion 315. At this time, the position of the variable valve 400 is controlled to be near the position d in FIG 3. Along with this, the amount of the air flowing into the cooling air channel portion 315 increases. By this, the cooling of the cell 310 is accelerated, and the cell temperature decreases quickly. Moreover, at this time, the amount of the air flowing into the power generating air channel portion 314 decreases. However, as is clear from FIG. 4, even if the air for power generation decreases, the cell voltage hardly deteriorates, so that there is no problem.

If the cooling of the cell 310 is accelerated by the process according to the step A13 or the step A14, the process returns to the step A10, and the monitoring of the cell temperature is continued.

As described above, according to the air-cooled fuel cell system 10 in the embodiment, even in the temperature area in which there is a large change in the cell voltage with respect to the stoichiometric ratio, it is possible to reduce the cell temperature without a decrease in the cell voltage, by operation of the variable valve 400.

Incidentally, a difference between the cell temperature and the target temperature Ta, and the supply of the air supplied by the air supplying apparatus 210 may be correlated or corresponded with each other in advance, experimentally, experientially, or on the basis simulations or the like, and may be stored in such a form that the controlling apparatus 100 can refer to them. In this case, in the process according to the step A13, the controlling apparatus 100 may control the air supplying apparatus 210 on the basis of this correspondence relationship, as occasion demands. Alternatively, the controlling apparatus 100 may control the air supplying apparatus 210 so as to simply increase the amount of the air from the present situation. Even in this case, it is possible to easily make the cell temperature converge to the target temperature Ta, by a series of loop processes starting from the step A10.

Moreover, a difference between the cell temperature and the target temperature Ta, and the distribution ratio by the variable valve 400 (or a controlling amount which realizes the distribution ratio) may be correlated or corresponded wit each other in advance, experimentally, experientially, or on the basis of simulations or the like, and may be stored in such a form that the controlling apparatus 100 can refer to them. In this case, in the process according to the step A14, the controlling apparatus 100 may control the variable valve 400 on the basis of this correspondence relationship, as occasion demands. Alternatively, the controlling apparatus 100 may control the variable valve 400 so as to simply increase the amount of the air flowing into the cooling air channel portion 315 from the present situation. Even in this case, it is possible to easily make the cell temperature converge to the target temperature Ta, by the series of loop processes starting from the step A10.

Incidentally, in the above-mentioned step A14, the controlling apparatus 100 may control the air supplying apparatus 210 in addition to the variable valve 400, to thereby increase the supply of the air itself. At this time, it is also possible to effectively increase the air for cooling without an increase of the air for power generation, by controlling the air supplying apparatus 210 such that the increase of the amount of the air flowing into the power generating air channel portion 314, which is caused by the air supplying apparatus 210, cancels out the decrease of the amount of the air flowing into the power generating air channel portion 314, which is caused by the variable valve 400. Moreover, in the above-mentioned step A13, the variable valve 400 may be controlled in addition to the air supplying apparatus 210, to thereby change the distribution ratio of the air in the air intake manifold 320.

Incidentally, in the embodiment, the target temperature Ta and the threshold temperature Tth are preset fixed values set. However, since the performance of the cell 310 easily changes with time, if the temperatures are fixed values, it is difficult to effectively cool down the cell in some cases. In case of this, the system may be constructed such that the target temperature Ta and the threshold temperature Tth can be set by the controlling apparatus 100, as occasion demands. In other words, the controlling apparatus 100 may be constructed to function as one example of the "target temperature setting device" and one example of the "threshold temperature setting device" of the present invention. In this case, for example, by managing the history of the cell temperature and the cell voltage or the like, an optimum target temperature and an optimum threshold temperature for the state of the cell 310 at the current time point may be newly set.

The present invention is not limited to the above-described embodiment, and various changes may be made, if desired, without departing from the invention which can be read from the claims and the entire specification. An air-cooled fuel cell system which involves such changes is also intended to be within the technical scope of the present invention.

### Industrial Applicability

The air-cooled fuel cell system according to the present invention can be applied to an air-cooled fuel cell system mounted on a vehicle and provided with an air-cooled fuel cell in which an oxidizing gas is used for power generation and cooling.

## Claims

1. An air-cooled fuel cell system (10) comprising:
an air-cooled fuel cell (300) having a cell (310) in which a first channel portion (315) for letting an oxidizing gas for cooling flow and a second channel portion (314) for letting an oxidizing gas for power generation flow are formed; and
a supplying device (210) for supplying oxidizing gas,
**characterized in that**
the first channel portion (315) and the second channel portion (314) are formed such that both the oxidizing gas for cooling and the oxidizing gas for power generation flow from a same side; and
the air-cooled fuel cell system (10) further comprises a distributing device (400) for distributing the supplied oxidizing gas into the first channel portion (315) and the second channel portion (314), as the oxidizing gas for cooling and the oxidizing gas for power generation, respectively, in a variable distribution ratio, a temperature detecting device (500) for detecting a temperature of the cell (310), and a controlling device (100) for (i) controlling at least one of said distributing device (400) and said supplying device (210) to increase the oxidizing gas for power generation if the detected temperature is less than a threshold temperature (Tth) which defines a temperature area in which a change in an amount of power generation of the cell (310) in response to a change of a stoichiometric ratio of the oxidizing gas for power generation is small and if the detected temperature is greater than a target temperature (Ta) which is set in advance as a temperature of less than the threshold temperature (Tth), and for (ii) controlling said distributing device (400) not to increase the oxidizing gas for power generation but to increase the oxidizing gas for cooling if the detected temperature is equal to or greater than the threshold temperature (Tth).

2. The air-cooled fuel cell system (10) according to claim 1, further comprising a target temperature setting device (100) for setting the target temperature (Ta) in accordance with a state of said air-cooled fuel cell (300).

3. The air-cooled fuel cell system (10) according to claim 1 or 2, further comprising a threshold temperature setting device (100) for setting the threshold temperature (Tth) in accordance with a state of said air-cooled fuel cell (300).

## Patentansprüche

1. Luftgekühltes Brennstoffzellensystem (10) mit:
einer luftgekühlten Brennstoffzelle (300) mit einer Zelle (310), in der ein erster Kanalabschnitt (315), der ein oxidierendes Gas zum Kühlen fließen lässt, und ein zweiter Kanalabschnitt (314), der ein oxidierendes Gas zur Energieerzeugung fließen lässt, ausgebildet sind; und
einer Zuführvorrichtung (210) zum Zuführen von oxidierendem Gas,
**dadurch gekennzeichnet, dass**
der erste Kanalabschnitt (315) und der zweite Kanalabschnitt (314) so ausgebildet sind, dass sowohl das oxidierende Gas zum Kühlen als auch das oxidierende Gas zur Energieerzeugung von einer selben Seite fließen; und
das luftgekühlte Brennstoffzellensystem (10) ferner eine Verteilungsvorrichtung (400) zum Verteilen des zugeführten oxidierenden Gases in den ersten Kanalabschnitt (315) und den zweiten Kanalabschnitt (314), jeweils als das oxidierende Gas zum Kühlen und das oxidierende Gas zur Energieerzeugung, in einem variablen Verteilungsverhältnis, eine Temperaturerfassungsvorrichtung (500) zum Erfassen einer Temperatur der Zelle (310) und eine Steuerungsvorrichtung (100) zum (i) Steuern mindestens einer von der Verteilungsvorrichtung (400) und der Zuführvorrichtung (210), um das oxidierende Gas zur Energieerzeugung zu erhöhen, falls die erfasste Temperatur geringer ist als eine Grenztemperatur (Tth), die einen Temperaturbereich definiert, in dem eine Änderung bezüglich einer Menge einer Energieerzeugung der Zelle (310) als Antwort auf eine Änderung eines stöchiometrischen Verhältnisses des oxidierenden Gases zur Energieerzeugung klein ist, und falls die erfasste Temperatur höher ist als eine Solltemperatur (Ta), die im Voraus als eine niedrigere Temperatur als die Grenztemperatur (Tth) festgesetzt ist, und zum (ii) Steuern der Verteilungsvorrichtung (400), um nicht das oxidierende Gas zur Energieerzeugung zu erhöhen, sondern das oxidierende Gas zur Kühlung zu erhöhen, falls die erfasste Temperatur gleich oder höher als die Grenztemperatur (Tth) ist, aufweist.

2. Luftgekühltes Brennstoffzellensystem (10) nach Anspruch 1, ferner mit einer Solltemperaturfestsetzungsvorrichtung (100) zum Festsetzen der Solltemperatur (Ta) in Abhängigkeit von einem Zustand der luftgekühlten Brennstoffzelle (300).

3. Luftgekühltes Brennstoffzellensystem (10) nach Anspruch 1 oder 2, ferner mit einer Grenztemperaturfestsetzungsvorrichtung (100) zum Festsetzen der Grenztemperatur (Tth) in Abhängigkeit von einem Zustand der luftgekühlten Brennstoffzelle (300).

## Revendications

1. Système (10) de pile à combustible refroidie par air comprenant :
une pile à combustible refroidie par air (300) ayant une pile (310) dans laquelle une première partie de canal (315) destinée à laisser un gaz oxydant pour le refroidissement s'écouler et une deuxième partie de canal (314) destinée à laisser un gaz oxydant pour la production d'énergie s'écouler, sont formées ; et
un dispositif d'alimentation (210) pour fournir un gaz oxydant,
**caractérisé en ce que**
la première partie de canal (315) et la deuxième partie de canal (314) sont formées de telle sorte que le gaz oxydant pour le refroidissement et le gaz oxydant pour la production d'énergie s'écoulent d'un même côté ; et
le système de pile à combustible refroidie par air (10) comprend en outre un dispositif de distribution (400) pour distribuer le gaz oxydant alimenté dans la première partie de canal (315) et la deuxième partie de canal (314), comme le gaz oxydant pour le refroidissement et le gaz oxydant pour la production d'énergie, respectivement, dans un rapport de distribution variable, un dispositif de détection de température (500) pour détecter une température de la pile (310), et un dispositif de commande (100) pour (i) commander au moins l'un dudit dispositif de distribution (400) et dudit dispositif d'alimentation (210) afin d'augmenter le gaz oxydant pour la production d'énergie si la température détectée est inférieure à une température seuil (Tth) qui définit une zone de température dans laquelle un changement d'une quantité de production d'énergie de la pile (310) en réponse à un changement d'un rapport stoechiométrique du gaz oxydant pour la production d'énergie est faible et si la température détectée est supérieure à une température cible (Ta) qui est réglée à l'avance comme une température inférieure à la température seuil (Tth), et pour (ii) commander ledit dispositif de distribution (400) afin de ne pas augmenter le gaz oxydant pour la production d'énergie mais d'augmenter le gaz oxydant pour le refroidissement si la température détectée est supérieure ou égale à la température seuil (Tth).

2. Système (10) de pile à combustible refroidie par air selon la revendication 1, comprenant en outre un dispositif de réglage de température cible (100) pour régler la température cible (Ta) conformément à un état de ladite pile à combustible refroidie par air (300).

3. Système (10) de pile à combustible refroidie par air selon la revendication 1 ou 2, comprenant en outre un dispositif (100) de réglage de température seuil pour régler la température seuil (Tth) conformément à un état de ladite pile à combustible refroidie par air (300).
